**Europäisches Patentamt**

**European Patent Office**

**Office européen des brevets**

(19)

(11) Publication number : **0 630 149 A1**

(12)

# EUROPEAN PATENT APPLICATION

(21) Application number : **94304494.1**

(22) Date of filing : **21.06.94**

(51) Int. Cl.⁵ : **H04N 1/40**

(30) Priority : **21.06.93 JP 148176/93**

(43) Date of publication of application :
**21.12.94 Bulletin 94/51**

(84) Designated Contracting States :
**DE FR GB**

(71) Applicant : **NEC CORPORATION**
**7-1, Shiba 5-chome**
**Minato-ku**
**Tokyo (JP)**

(72) Inventor : **Ogawa, Shigetaka, c/o NEC**
**Corporation**
**7-1, Shiba 5-chome,**
**Minato-ku**
**Tokyo (JP)**

(74) Representative : **Garratt, Peter Douglas et al**
**Mathys & Squire**
**10 Fleet Street**
**London EC4Y 1AY (GB)**

(54) **Method and apparatus for image processing.**

(57) A reference picture element extraction circuit constitutes a detection circuit detecting whether an image is a character image or a dot image together with a primary scanning direction edge detection circuit and a secondary scanning direction edge detection circuit. In general, a character image has continuous edges in which a boundary with a large density difference continues for two or more picture elements in the primary and the secondary scanning directions, while the dot image is a dot drawing and characterized by a very small number of continuous edges in picture elements in the primary or secondary scanning direction. An image identification circuit uses this characteristic to identify a character image or a dot image by detecting whether or not there are continuous edges in a matrix extracted from picture signals, and selects binary conversion (e.g. thresholding for characters, dithering for dot images) suitable for the image.

Fig.7.

EP 0 630 149 A1

The present invention relates to an image processing device and method for determining an image area and, more particularly, to the device and method for determining whether an image is a character image or another type of image.

In general, an image processing device such as a facsimile device or a phototelegraphic device generates a pictorial signal by scanning a document in which photo images, character images, and dot images are mixed; converts it to binary signals 0 and 1; and codes them. However, in the process of binary signal conversion, if the image is converted to binary signals 0 and 1 in exactly the same way regardless of the type of image, the coding efficiency drops and image reproducibility deteriorates. Thus, the conventional image processing device solves such problems by determining the type of image, and generating binary signals with methods suitable for the respective images.

In relation to the image processing technique for determining the type of image, USP 4,547,811 discloses a method for distinguishing a binary image from an image with gray levels, such as a photograph. The method performs the following determination by dividing a document into blocks each composed of m x n picture elements, detecting the maximum density level $L_{max}$ and the minimum density level $L_{min}$ of picture signal levels in the blocks, and comparing them with a reference value P.

i) The image in a block is a character image

if $L_{max} - L_{min} > P$, and

ii) The image in a block is a photo image

if $L_{max} - L_{min} \leqq P$.

However, while the above method is effective in distinguishing a photo image whose density level continuously varies and a character image, it is not effective in distinguishing a dot image which is dot drawing and a character image.

As an alternative image processing technique, there is a method which utilizes the characteristic that a character image has a larger differential amount or density difference at the boundary, and determines an image to be a character image if the differential amount is large, and not to be a character image in other cases. However, because the differential amount is large at a boundary not only of a character but also of a dot in a dot image, there is a higher possibility for a dot image to be determined to be a character image.

If a dot image is determined to be a character image and its picture signal is converted to binary signals in a binary conversion circuit corresponding to a character image, the reproducibility of the dot image deteriorates, and the reproduced image becomes rather dark and obscure.

Accordingly, the object of the present invention is to provide a device and method for image processing which can accurately identify areas of a dot image and a character image, and perform binary conversion suitable for the respective images.

In general, an image mainly consisting of line drawings, such as a character image, not only has a distinct boundary between low and high densities but also is composed of continuous edges in which the boundary length continues for two or more picture elements in the same direction. However, an image consisting of dot drawings, such as a dot image, has edges but is not composed of continuous edges continuing for two or more picture elements in the same direction. The device and method for image processing according to the present invention convert a picture signal to binary signals suitable for dot images and character images, respectively, by detecting such continuous edges.

According to one aspect of the present invention, it is possible to obtain an image processing device comprising a detection circuit for detecting a continuous edge, in which a boundary with a large density difference continues for two or more picture elements, from picture signals of picture elements in the primary scanning direction and the secondary scanning direction based on picture signals corresponding to the density of picture elements (pixels) in an image, for generating a first detection signal when the continuous edge is detected from picture signals of picture elements in the primary scanning direction, and for generating a second detection signal when the continuous edge is detected from picture signals of picture elements in the secondary scanning direction, a first binary conversion circuit for converting picture signals to binary signals at the generation of at least one of the first and second detection signals, and a second binary conversion circuit for converting picture signals to binary signals by binary conversion different from that of the first conversion circuit at the generation of neither the first nor second detection signal.

In addition, according to another aspect of the present invention, it is possible to obtain an image processing device comprising a detection circuit for detecting a continuous edge in which a boundary with a large density difference continues for two or more picture elements from picture signals of picture elements in the primary scanning direction, the secondary scanning direction, and the diagonal direction based on picture signals corresponding to the picture element density in an image, for generating a first detection signal when the continuous edge is detected from picture signals of picture elements in the primary scanning direction, for generating a second detection signal when the continuous edge is detected from picture signals of picture elements in the secondary scanning direction, and for generating a third detection signal when the continuous edge is detected from picture signals of picture elements in the diagonal direction, a first binary conversion circuit for converting picture signals to binary signals at the generation of either and at least one of the first, second, and third detection signals, and a second binary conversion circuit for converting picture signals to binary signals by binary conversion different from that of the first conversion circuit at the generation of neither the first, second, nor third detection signal.

Moreover, the image processing method according to a further aspect of the present invention detects, in the first step, a continuous edge in which a boundary with a large density difference continues for two or more picture elements from picture signals of picture elements in the primary scanning direction and a secondary scanning direction based on picture signals corresponding to the density of picture elements in at image. At the moment, a continuous edge continuous in the diagonal direction may be detected. In the second step, it generates a first detection signal when the continuous edge is detected from picture signals of picture elements in the primary direction, and a second detection signal when the continuous edge is detected from picture signals of picture elements in the secondary scanning direction. In the third step, it converts picture signals to binary signals at the generation of at least one of the first and second detection signals. In the fourth step, it converts picture signals to binary signals at the generation of neither the first nor second detection signal.

The above and other objects, features, and advantages of the present invention will become more apparent from the following detailed description, by way of example, taken from the accompanying drawings in which:

Figure 1 is a block diagram showing the image processing device of an embodiment of the present invention;

Figure 2 is a block diagram showing a matrix of picture elements extracted by a reference picture element extraction circuit in the image processing device in Figure 1;

Figure 3 is a block diagram showing four patterns of an edge detection vector on the matrix in Figure 2;

Figure 4 is a circuit diagram showing a primary scanning direction detection circuit in the image processing device in Figure 1;

Figure 5 is a circuit diagram showing a secondary scanning direction detection circuit in the image processing devide in Figure 1;

Figure 6 is a detailed block diagram of a binary conversion circuit in the image processing device in Figure 1;

Figure 7 is a block diagram showing the image processing device of another embodiment of the present invention;

Figure 8 is a block diagram showing a matrix of picture elements extracted by a reference picture element extraction circuit in the image processing device in Figure 7;

Figure 9 is a block diagram showing patterns of an edge detection vector on the matrix in Figure 8;

Figure 10 is a circuit diagram showing a diagonal direction detection circuit in the image processing device in Figure 7;

Figure 11 is a detailed block diagram of a binary conversion circuit in the image processing device in Figure 7; and

Figure 12 is a detailed block diagram of a reference picture element extraction circuit in the image processing device in Figure 7.

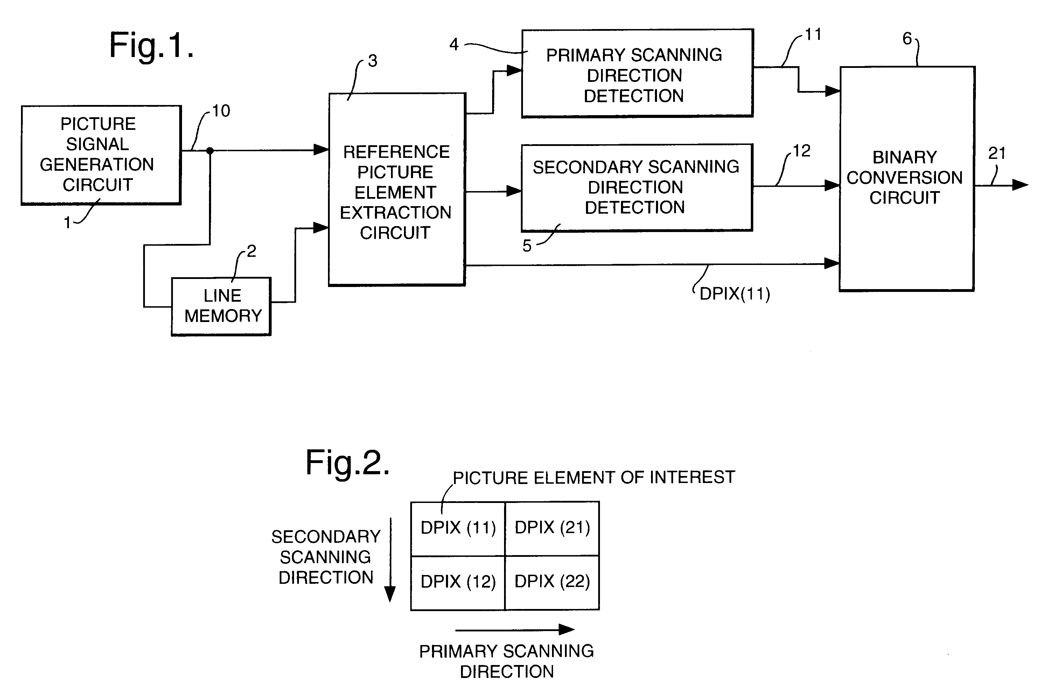

Figure 1 is a block diagram showing the image processing device of the first embodiment of the present invention. In the figure, a picture signal generation circuit 1 generates a picture signal corresponding to the density of a picture element by scanning an original document with an image sensor, converts it to a digital signal, and outputs a multivalue digital picture signal (hereinafter called the "picture signal") 10. For example, when a picture signal with 256 tones is generated, the picture signal 10 is an 8-bit multivalue digital signal. The size of one picture element is 0.125 mm/dot.

Line memory 2 stores picture signals 10 for one scan line, and, when it becomes full, outputs stored picture signals in the sequence of input. Therefore, line memory 2 is equivalent to a delay circuit delaying the picture signal 10 by one scan line.

A reference picture element extraction circuit 3 continuously extracts picture elements in a 2 x 2 square matrix composed of the picture element of interest to be converted to binary and the three adjacent reference picture elements based on the picture signal 10 and the picture signal from line memory 2, and outputs the picture signal of that picture element. Figure 2 shows the matrix of a picture element extracted by the reference picture element extraction circuit 3, in which DPIX (11) and DPIX (21) are picture elements one line before from line memory 2 or their picture signals, and DPIX (12) and DPIX (22) are picture elements of the picture signal 10 or their picture signals. The picture element of interest is the oldest picture element DPIX (11) in the matrix, and all others are reference picture elements. However, the picture element of interest may be any picture element in the matrix of Figure 2.

The reference picture element extraction circuit 3 constitutes a detection circuit detecting whether an image is a character image or a dot image together with a primary scanning direction edge detection circuit 4 and a secondary scanning direction edge detection circuit 5. In general, the character image is a line drawing, and composed of boundaries between black and white areas of a length of two or more picture elements in the primary or secondary scanning direction or continuous edges, while the dot image is a dot drawing and characterized by a very small number of continuous edges in picture elements in the primary or secondary scanning direction. The detection circuit uses this characteristic to identify a character image or a dot image by detecting whether or not there are continuous edges in the 2 x 2 matrix in picture elements in the primary or secondary scanning direction.

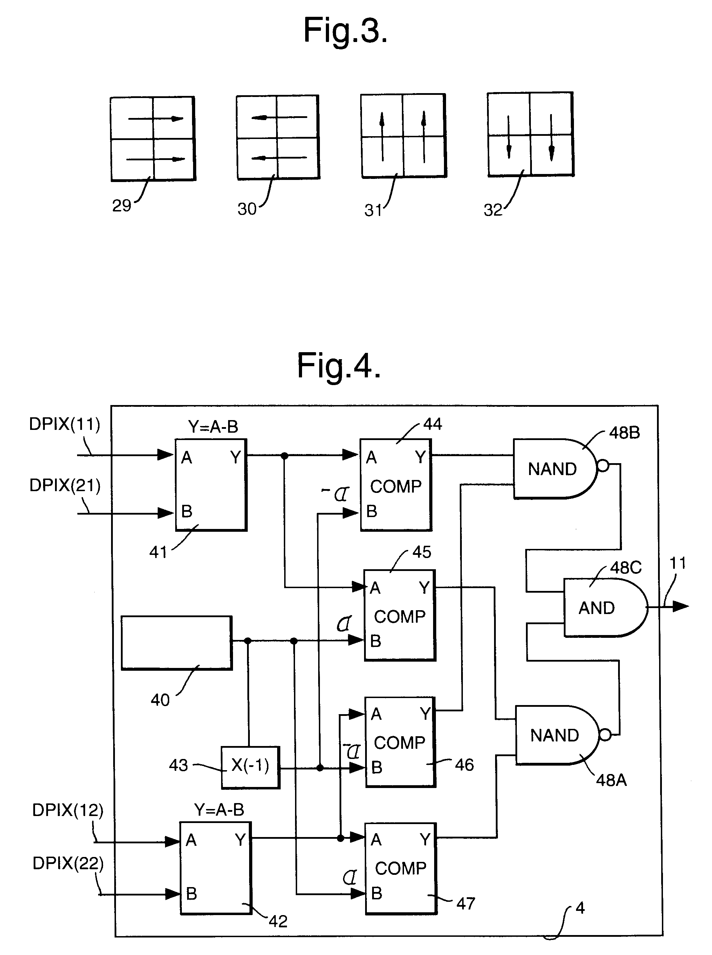

Figure 3 shows an edge detection vector representing edge detection directions and detected picture elements on the 2 x 2 matrix. In the Figure, arrows in the patterns 29 and 30 are edge detection vectors in the primary scanning direction of the primary scanning direction edge detection circuit 4, and arrows in the patterns 31 and 32 are edge detection vectors in the secondary scanning direction of the secondary scanning direction edge detection circuit 5. The primary scanning direction edge detection circuit 4 (the secondary scanning direction edge detection circuit 5) detects the difference between picture signals of adjacent picture elements each positioned on two edge detection vectors, determines that there is a continuous edge if the two detected difference signals are equal to or larger than a reference value and are of the same sign (plus or minus), and that there is no continuous edge if difference signals are less than the reference value or of a different signal, and outputs the result.

That is, assuming that the reference value for edge determination is $\alpha$, the primary scanning direction edge detection circuit 4 determines that a continuous edge is on the edge detection vector in the primary scanning direction when

$$\text{DPIX (11)} - \text{DPIX (21)} \geqq \alpha \quad (1),$$
and
$$\text{DPIX (12)} - \text{DPIX (22)} \geqq \alpha \quad (2)$$
or
$$\text{DPIX (11)} - \text{DPIX (21)} \leqq -\alpha \quad (3),$$
and
$$\text{DPIX (12)} - \text{DPIX (22)} \leqq -\alpha \quad (4)$$

are established; otherwise, it determines that there is no continuous edge and outputs the result of determination as a primary scanning direction detection signal 11.

In addition, the secondary scanning direction edge detection circuit 5 determines that a continuous edge is on the edge detection vector in the secondary scanning direction when

$$\text{DPIX (11)} - \text{DPIX (12)} \geqq \alpha \quad (5),$$
and
$$\text{DPIX (21)} - \text{DPIX (22)} \geqq \alpha \quad (6)$$
or
$$\text{DPIX (11)} - \text{DPIX (12)} \leqq -\alpha \quad (7),$$
and
$$\text{DPIX (21)} - \text{DPIX (22)} \leqq -\alpha \quad (8)$$

are established; otherwise, it determines that there is no continuous edge and outputs the result of determination as a secondary scanning direction detection signal 12.

A binary conversion circuit 6 determines, based on the primary scanning direction detection signal 11 and secondary scanning direction detection signal 12, whether the picture signal DPIX (11) of the picture element of interest is binary-converted in a manner suitable to a character image or in a manner suitable to a pseudo-halftone image such as a dot image, and generates binary-converted output 21.

Figure 4 is a detailed circuit diagram of the primary scanning direction edge detection circuit 4. In the figure, a subtraction circuit 41 is supplied with picture signals DPIX (11) and DPIX (21), performs subtraction for the left side of the formula (1), and outputs a difference signal. A subtraction circuit 42 is supplied with picture signals DPIX (12) and DPIX (22), performs subtraction for the left side of the formula (2), and outputs a difference signal. The difference signal from the subtraction circuit 41 is supplied to comparators 44 and 45, and the difference signal from the subtraction circuit 42 is supplied to comparators 46 and 47.

A reference value generator circuit 40 generates the reference value $\alpha$, which is, in turn, supplied to comparators 45 and 47. A sign inversion circuit 43 inverts the sign of the reference value $\alpha$, and a reference value $-\alpha$ is supplied to comparators 44 and 46. Therefore, each of the comparators 45 and 47 compares the left and right sides of formulas (1) and (2). If each comparator finds formulas (1) and (2) to be satisfied, its output Y becomes 1. Otherwise, it is 0. Each of the comparators 44 and 46 compares the left and right sides of formulas (3) and (4). If each comparator finds formulas (3) and (4) to be satisfied, its output Y becomes 1. Otherwise, it is 0.

A NAND gate 48A receives the output of comparators 45 and 47, and outputs 0 if formulas (1) and (2) are simultaneously established. A NAND gate 48B receives the output of comparators 44 and 46, and outputs 0 if formulas (3) and (4) are simultaneously established. When at least one of the outputs of the NAND gates 48A and 48B is 0, an AND gate 48C outputs the primary scanning direction detection signal 11.

Therefore, when the edge detection direction is in the primary scanning direction as shown by patterns 29 and 30 of Figure 3, the primary scanning direction detection signal 11 becomes 0 if a continuous edge is detected in either pattern, and becomes 1 if a continuous edge is not detected.

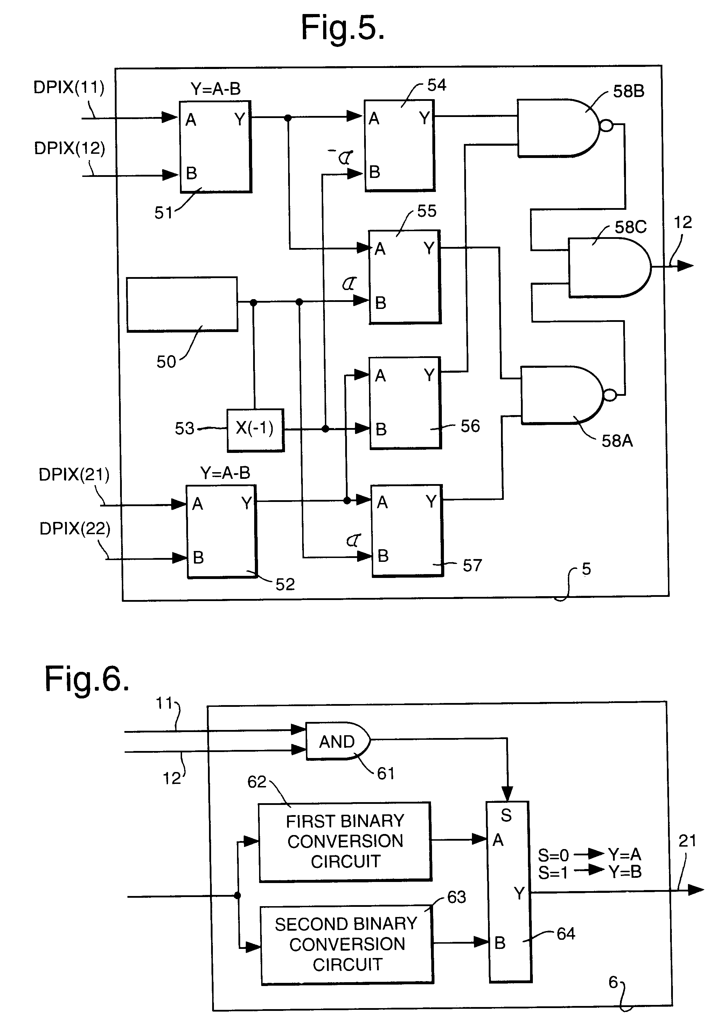

Figure 5 is a detailed circuit diagram of the secondary scanning direction edge detection circuit 5. It has the same circuit configuration as the primary scanning direction edge detection circuit 4. Picture signals DPIX (11) and DPIX (12) are supplied to a subtraction circuit 51, while picture signals DPIX (21) and DPIX (22) are supplied to a subtraction circuit 52. Then, the operations of a reference value generation circuit 50, a sign inversion circuit 51, comparators 54, 55, 56, 57, NAND gates 58A, 58B, and AND gate 58C are the same as those of corresponding circuits in the primary scanning direction edge detection circuit 4.

Therefore, when the edge detection direction is in the secondary scanning direction as shown by patterns 31 and 32 in Figure 3, the secondary scanning direction detection signal 12 becomes 0 if a continuous edge is detected in either pattern, and becomes 1 if a continuous edge is not detected.

A binary conversion circuit 6 comprises, as shown in Figure 6, an AND gate 61 to which the primary scanning direction detection signal 11 and secondary scanning direction detection signal 12 are supplied, a first binary conversion circuit 62 which conducts binary conversion suitable for a character image, a second binary conversion circuit 63 which conducts binary conversion suitable for pseudo-halftones such as a dot image, and a selection circuit 64 which selects the first or second binary conversion circuit 62 or 63 according to the output of the AND gate 61.

The selection circuit 64 selects the first binary conversion circuit 62 when the output of the AND gate 61 is 0, that is, when the continuous edge is detected in the primary or secondary scanning direction, and selects the second binary conversion circuit 63 when the continuous edge is not detected in both the primary and secondary scanning directions.

The first binary conversion circuit 62 compares the picture signal DPIX (11) of the picture element of interest with a predetermined threshold value, determines white (1) if it is larger than the threshold value, or black (0) if it is smaller than the threshold value, and generates a binary conversion output 21 signal of 0, 1. In this case, the threshold value may be a fixed value, or a value representing an average picture element density around the picture element of interest.

As the second binary conversion circuit 63, a known dither matrix code conversion circuit is employed, but any other binary conversion circuit for halftone signals may be used.

As described above, the image processing circuit in Figure 1 detects whether or not continuous edges exist in a picture element in a 2 x 2 matrix in the primary or secondary scanning direction, and selects a binary conversion method for the picture element of interest according to the result of detection so that binary conversion suitable for a character image or a dot image to improve the reproduction or coding efficiency of the image.

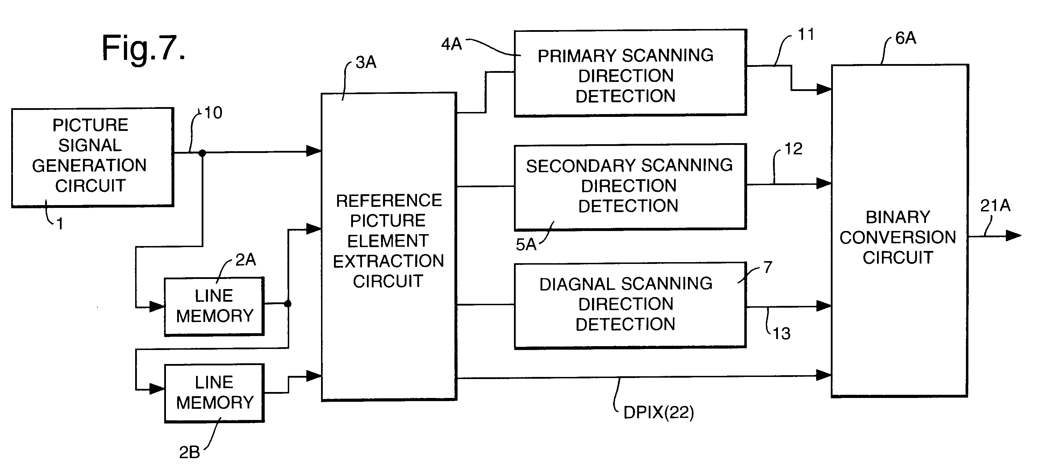

Figure 7 is a block diagram showing an image converter according to the second embodiment of the present invention. In the figure, the picture signal generation circuit 1 generates a multivalue digital picture signal 10 as in the circuit of Figure 1. Line memories 2A, 2B are serially connected and output picture signals delayed by one line and two lines, respectively.

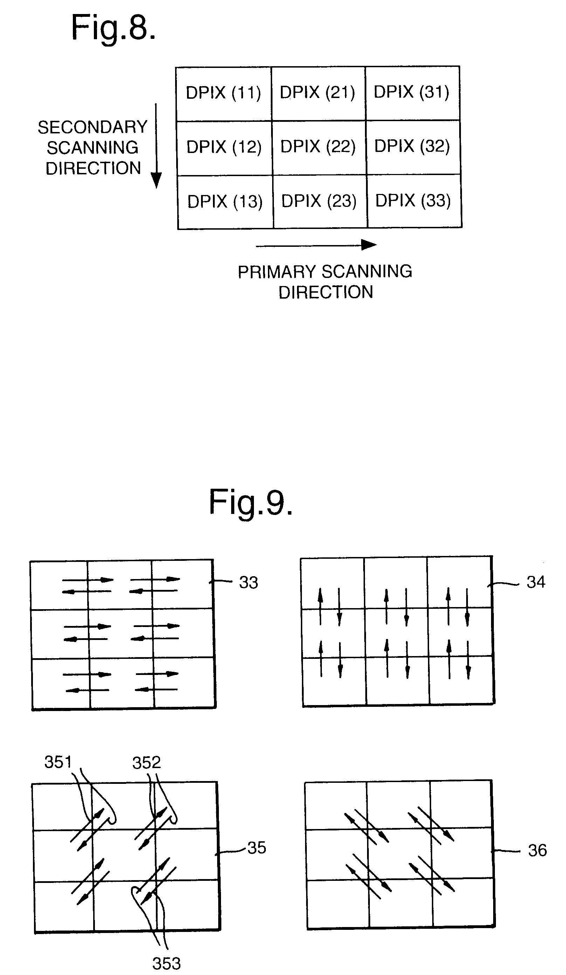

A reference picture element extraction circuit 3A continuously extracts picture elements in a 3 x 3 square matrix composed of the picture element of interest to be binary-converted and eight adjacent picture elements based on the picture signal 10 and picture signals from line memories 2A, 2B, and outputs picture signals of these picture elements. Figure 8 shows the matrix of picture elements extracted by the reference picture element extraction circuit 3A, in which DPIX (11), DPIX (21) and DPIX (31) are picture elements two lines before from line memory 2B or their picture signals, DPIX (12), DPIX (22) and DPIX (32) are picture elements one line before from line memory 2A or their picture signals, and DPIX (13), DPIX (23) and DPIX (33) are the picture element of the picture signal 10 or its picture signal. The picture element of interest is that DPIX (22) at the center of the matrix, and all others are reference picture elements.

The reference picture element extraction circuit 3A constitutes a detection circuit detecting whether an image is a character image or a dot image together with a primary scanning direction edge detection circuit 4A, a secondary scanning direction edge detection circuit 5A, and a diagonal direction edge detection circuit 7. In general, a character image has relatively long (two or more picture elements) boundaries between black and white areas or continuous edges not only in the primary and secondary scanning directions but also in the diagonal direction, while a dot image is a dot drawing and has a very small number of continuous edges in the primary scanning, secondary scanning, and diagonal directions. The detection circuit uses this characteristic to detect whether or not there are continuous edges in the 3 x 3 matrix in the primary scanning, secondary scanning, and diagonal directions.

A binary conversion circuit 6A binary-converts the picture signal DPIX (11) of the picture element of interest for a character image when any one of the primary scanning direction detection signal 11, secondary scanning direction detection signal 12, or diagonal direction detection signal 13 from the diagonal direction edge detection circuit 7, and binary-converts it for a pseudo-halftone image when all of these signals indicate no continuous edge, and outputs binary-converted output 21A.

Figure 9 is patterns of an edge detection vector representing edge detection directions in the primary scanning, secondary scanning, and diagonal directions and detected picture elements. A pattern 33 represents an edge detection vector in the primary scanning direction, a pattern 34 represents an edge detection vector in the secondary scanning direction, and a pattern 35 or 36 represents an edge detection vector in the diagonal direction.

Detection of continuous edges in picture elements in the primary and secondary scanning directions can be sufficiently handled by a 2 x 2 matrix. It may be possible to increase the number of edge detection vectors by widening the matrix, but the effect is hardly improved. Therefore, the primary scanning direction edge detection circuit 4A and the secondary scanning direction edge detection circuit 5A do not detect an edge by using all edge detection vectors of patterns 33, 34, but detect continuous edges by using only edge detection vectors in the 2 x 2 matrix area containing the picture element of interest DPIX (22). In this embodiment, picture elements in the 2 x 2 matrix area are DPIX (11), DPIX (21), DPIX (12), and DPIX (22). Therefore, the primary scanning direction edge detection circuit 4A and secondary scanning direction edge detection circuit 5A have the exact same configuration as the primary scanning direction edge detection circuit 4 and secondary scanning direction edge detection circuit 5 shown in Figures 4 and 5.

Furthermore, when a continuous edge in picture elements in the diagonal direction is to be detected, edge detection vectors in patterns 35, 36 are used. The diagonal direction edge detection circuit 7 detects continuous edges by using edge detection vectors 351, 352, 353 in the pattern 35. In this case, the diagonal direction edge detection circuit 7 determines that a continuous edge is on edge detection vectors 351, 352 and 353 when

$$DPIX (21) - DPIX (12) \geqq \alpha \quad (9),$$

and

$$DPIX (31) - DPIX (22) \geqq \alpha \quad (10),$$

and

$$DPIX (32) - DPIX (23) \geqq \alpha \quad (11)$$

or

$$DPIX (21) - DPIX (12) \leqq - \alpha \quad (12),$$

and

$$DPIX (31) - DPIX (22) \leqq - \alpha \quad (13),$$

and

$$DPIX (32) - DPIX (23) \leqq - \alpha \quad (14)$$

are established, otherwise, it determines that there is no continuous edge on these vectors, and outputs the result of determination as a diagonal direction detection signal 13.

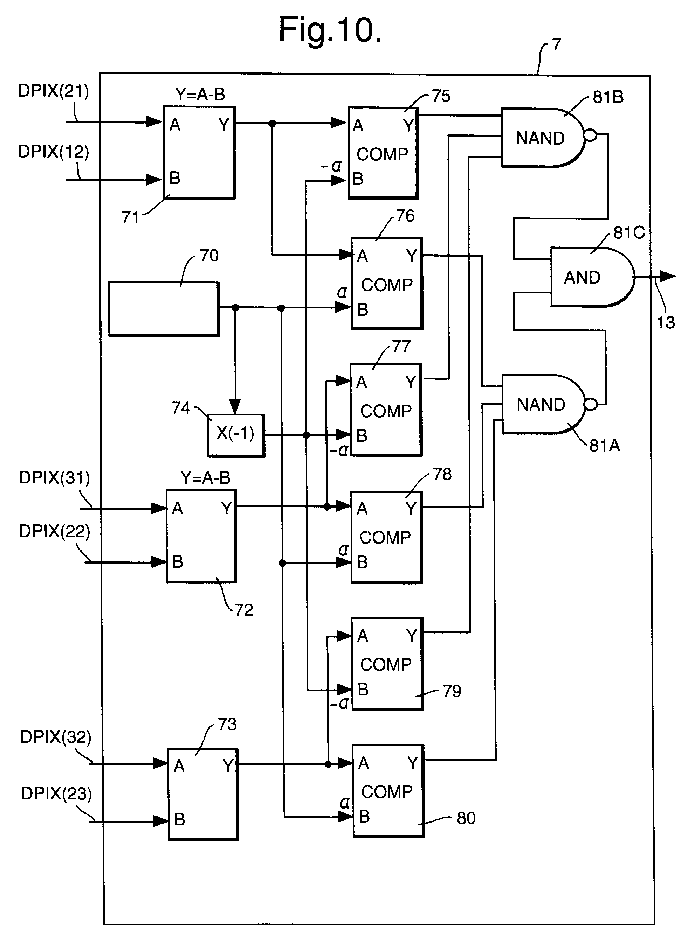

Figure 10 is a detailed circuit diagram of the diagonal direction detection circuit 7. In the figure, a subtraction circuit 71 is supplied with picture signals DPIX (21) and DPIX (12), performs subtraction for the left side of the formula (9), and outputs a difference signal. A subtraction circuit 72 is supplied with picture signals DPIX (31) and DPIX (22), performs subtraction for the left side of the formula (10), and outputs a difference signal. A subtraction circuit 73 is supplied with picture signals DPIX (32) and DPIX (23), performs subtraction for the left side of the formula (11), and outputs a difference signal. The difference signal from the subtraction circuit 71 is supplied to comparators 75 and 76, the difference signal from the subtracter circuit 72 to comparators 77 and 78, and the difference signal from the subtraction circuit 73 to comparators 79 and 80.

A reference value generation circuit 70 generates a reference value $\alpha$, which is, in turn, supplied to comparators 76, 78 and 80. A sign inversion circuit 74 inverts the sign of the reference value $\alpha$, and a reference value $-\alpha$ is supplied to comparators 75, 77 and 79. Therefore, comparators 76, 78 and 80 compare the left and right sides of formulas (9), (10), and (11), respectively, and their output Y becomes 1 if formulas (9), (10), and (11) are satisfied; otherwise, it becomes 0. Comparators 75, 77, and 79 compare left and right sides of formulas (12), (13), and (14), respectively, and their output Y becomes 1 if formulas (12), (13) and (14) are satisfied; otherwise, it becomes 0.

The NAND gate 81A receives the output of comparators 76, 78 and 80, and outputs 0 if formulas (9), (10), and (11) are simultaneously established. The NAND gate 81B receives the output of comparators 75, 77, and 79, and outputs 0 if formulas (12), (13), and (14) are simultaneously established. The AND gate 81C outputs the diagonal direction detection signal 13 of 0 if at least one of the outputs of NAND gates 81A and 81B is 0.

Therefore, the diagonal direction detection signal 13 becomes 0 when an edge of picture elements in the diagonal direction is detected on vectors 351, 352, and 353 in the pattern 35 of Figure 9, and becomes 1 when a continuous edge is not detected.

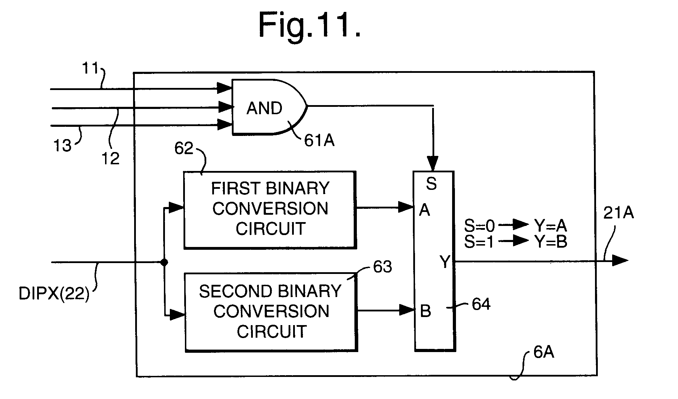

The primary scanning direction detection signal 11, secondary scanning direction detection signal 12, and diagonal direction detection signal 13 are supplied to an AND gate 61A of the binary conversion circuit 6A shown in Figure 11. The output of the AND gate 61A is supplied to the selection circuit 64 as a selection control signal.

The selection circuit 64 selects the first binary conversion circuit 62 when the output of the AND gate 61 is 0, that is, when a continuous edge is detected in picture elements in any of the primary scanning, secondary scanning, and diagonal directions, and selects the second binary conversion circuit 63 when no continuous edge is detected in any of the primary scanning, secondary scanning, or diagonal directions.

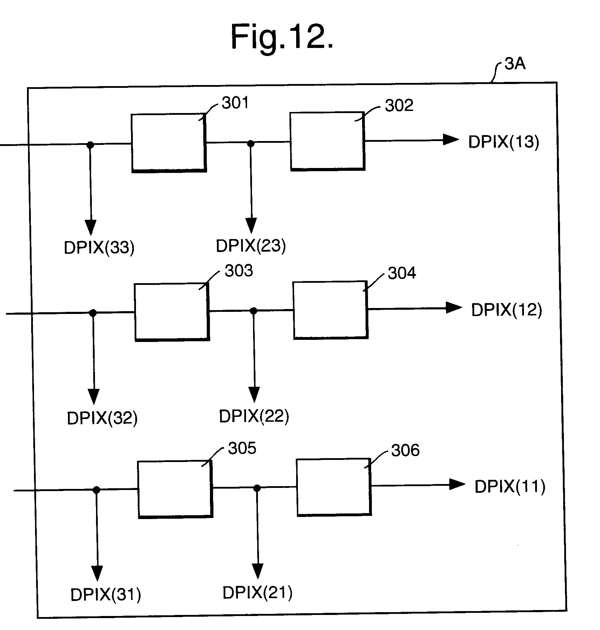

In the embodiments described above, reference picture element extraction circuits 3 and 3A are composed of a plurality of picture element delay circuits. For example, as shown in Figure 12, the reference picture element extraction circuit 3A is composed of picture element delay circuits 301 and 302 for delaying the picture signal 10, picture element delay circuits 303 and 304 for delaying output of line memory 2A, and picture element delay circuits 305 and 306 for delaying output of line memory 2B.

The image processing device of the present invention is not limited to the embodiments above described. For example, line memory may be a simple shift register instead of FIFO memory. Also, the picture signal generation circuit 1 may not necessarily be required, and it may be acceptable that the digital multivalue picture signal 10 is supplied to a detection circuit for detecting continuous edges.

## Claims

1. An image processing device comprising:

   a detector circuit for detecting a continuous edge in which a boundary with a large density difference continues for two or more picture elements based on picture signals corresponding to picture element density in an image, and for generating a detection signal when said continuous edge is detected,

   a first binary conversion circuit for converting said picture signals to binary signals at the generation of said detection signal, and

   a second binary conversion circuit for converting said picture signals to binary signals by binary conversion different from that of said first conversion circuit at the generation of no detection signal.

2. An image processing device comprising:

   a detector circuit for detecting a continuous edge in which a boundary with a large density difference continues for two or more picture elements from picture signals of picture elements in the primary scanning direction and secondary scanning direction based on picture signals corresponding to picture element density in an image, for generating a first detection signal when said continuous edge is detected from picture signals of picture elements in said primary scanning direction, and for generating a second detection signal when said continuous edge is detected from picture signals of picture elements in said secondary scanning direction,

   a first binary conversion circuit for converting said picture signals to binary signals at the generation of at least one of said first and said second detection signals, and

   a second binary conversion circuit for converting said picture signals to binary signals by binary conversion different from that of said first conversion circuit at the generation of neither said first nor said second detection signal.

3. An image processing device according to claim 2, wherein said detection circuit comprises:

   an extraction means for extracting picture signals in a predetermined matrix area containing the picture element of interest from said picture signals corresponding to the picture element density of an image,

   a first detection means for detecting said continuous edge from picture signals of picture elements in the primary scanning direction in said matrix area, and for generating said first detection signal, and

   a second detection means for detecting said continuous edge from picture signals of picture elements in the secondary scanning direction in said matrix area, and for generating said second detection signal,

   said first and second conversion means converts the picture signals of said picture element of interest to binary signals, respectively.

4. An image processing device according to Claim 3, wherein said first detection means comprises a means for detecting the difference between picture signals of adjacent picture elements located on at least two vectors in the primary scanning direction in said matrix area, and means for generating said first detection signal when detecting that at least two difference signals are larger than a reference value and have the same sign (plus or minus),

   said second detection means comprising a means for detecting the difference between picture signals of adjacent picture elements located on at least two vectors in the secondary scanning direction in said matrix area, and means for generating said second detection signal when detecting that at least two difference signals are larger than a reference value and have the same sign (plus or minus).

5. An image processing device according to Claim 3, wherein said matrix area is a 2 x 2 matrix.

6. An image processing device comprising:

   a detection circuit for detecting a continuous edge, in which a boundary with a large density difference continues for two or more picture elements, from picture signals of picture elements in a primary scanning direction, secondary scanning direction, and diagonal direction based on picture signals corresponding to the picture element density in an image, for generating a first detection signal when said continuous edge is detected from picture signals of picture elements in said primary scanning direction, for generating a second detection signal when said continuous edge is detected from picture signals of picture elements in said secondary scanning direction, and for generating a third detection signal when said continuous edge is detected from picture signals of picture elements in said diagonal direction,

   a first binary conversion circuit for converting said picture signals to binary signals at the generation of either least one of said first, said second, and said third detection signals, and

a second binary conversion circuit for converting said picture signals to binary signals by binary conversion different from that of said first conversion circuit at the generation of neither said first, said second, nor said third detection signals.

7. An image processing device according to Claim 6, wherein said detection circuit comprises: an extraction means for extracting picture signals in a predetermined matrix area containing the picture element of interest from said picture signals corresponding to picture element density of an image,

a first detection means for detecting said continuous edge from picture signals of picture elements in the priamry scanning direction in said matrix area, and for generating said first detection signal,

a second detection means for detecting said continuous edge from picture signals of picture elements in the secondary scanning direction in said matrix area, and for generating said second detection signal, and

a third detection means for detecting said continuous edge from picture signals of picture elements in the diagonal direction in said matrix area, and for generating said third detection signal.

8. An image processing device according to Claim 7, wherein said first detection means comprises a means for detecting the difference between picture signals of adjacent picture elements located on at least two vectors in the primary scanning direction in said matrix area, and means for generating said first detection signal when the detected at least two difference signals are larger than a reference value and have the same sign (plus or minus),

said second detection means comprising a means for detecting the difference between picture signals of adjacent picture elements located on at least two vectors in the secondary scanning direction in said matrix area, and means for generating said second detection signal when the detected at least two difference signals are larger than a reference value and have the same sign (plus or minus),

said third detection means comprising a means for detecting the difference between picture signals of adjacent picture elements located on at least two vectors in the diagonal direction in said matrix area, and means for generating said third detection signal when detected at least two difference signals are larger than a reference value and have the same sign (plus or minus).

9. An image processing device according to Claim 8, wherein said matrix area is a 3 x 3 matrix.

10. An image processing device according to Claim 1, Claim 2 or Claim 6, wherein said first binary conversion means performs binary conversion suitable for a character image.

11. An image processing device according to Claim 1, Claim 2 or Claim 6, wherein said second conversion means performs binary conversion suitable for a halftone image.

12. An image processing method comprising:

a first step for detecting a continuous edge in which a boundary with a large density difference continues for two or more picture elements based on picture signals corresponding to picture element density in an image,

a second step for generating a detection signal when said continuous edge is detected,

a third step for converting said picture signals to binary signals at the generation of said detection signal, and

a fourth step for converting said picture signals to binary signals at the generation of no detection signal.

13. An image processing method comprising:

a first step for detecting a continuous edge in which a boundary with a large density difference continues for two or more picture elements from picture signals of picture elements in the primary scanning direction and the secondary scanning direction based on picture signals corresponding to picture element density in an image,

a second step for generating a first detection signal when said continuous edge is detected from picture signals of picture elements in said primary scanning direction, and a second detection signal when said continuous edge is detected from the picture signals of picture elements in said secondary scanning direction,

a third step for converting said picture signals to binary signals at the generation of at least one of said first and said second detection signals, and

a fourth step for converting said picture signals to binary signals at the generation of neither said first nor said second detection signal.

14. An image processing method comprising:

a first step for detecting a continuous edge in which a boundary with a large density difference continues for two or more picture elements

from picture signals of picture elements in the primary scanning direction and secondary scanning direction based on picture signals corresponding to picture element density in an image,

a second step for generating a first detection signal when said continuous edge is detected from picture signals of picture elements in said primary direction, a second detection signal when said continuous edge is detected from picture signals of picture elements in said secondary scanning direction, and a third detection signal when said continuous edge is detected from picture signals of picture elements in said diagonal direction,

a third step for converting said picture signals to binary signals at the generation of any of said first, said second detection, or said third signal, and

a fourth step for converting said picture signals to binary signals at the generation of neither said first, said second, nor said third detection signal.

## Fig.1.

PICTURE SIGNAL GENERATION CIRCUIT — 1

LINE MEMORY — 2

10

REFERENCE PICTURE ELEMENT EXTRACTION CIRCUIT — 3

PRIMARY SCANNING DIRECTION DETECTION — 4

SECONDARY SCANNING DIRECTION DETECTION — 5

11

12

DPIX(11)

BINARY CONVERSION CIRCUIT — 6

21

## Fig.2.

PICTURE ELEMENT OF INTEREST

| DPIX (11) | DPIX (21) |
| DPIX (12) | DPIX (22) |

SECONDARY SCANNING DIRECTION

PRIMARY SCANNING DIRECTION

EP 0 630 149 A1

# Fig.3.

29    30    31    32

# Fig.4.

# Fig.5.

# Fig.6.

## Fig.7.

# Fig.8.

| DPIX (11) | DPIX (21) | DPIX (31) |
|-----------|-----------|-----------|
| DPIX (12) | DPIX (22) | DPIX (32) |
| DPIX (13) | DPIX (23) | DPIX (33) |

SECONDARY
SCANNING
DIRECTION

PRIMARY SCANNING
DIRECTION

# Fig.9.

# Fig.10.

# Fig.11.

AND — 61A

11

13    12

62

FIRST BINARY
CONVERSION
CIRCUIT

S

A

S=0 → Y=A
S=1 → Y=B

21A

Y

63

SECOND BINARY
CONVERSION
CIRCUIT

B — 64

DIPX(22)

6A

# Fig.12.

European Patent
Office

**EUROPEAN SEARCH REPORT**

Application Number

EP 94 30 4494

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 411 911 (CANON) | 1-3,5-7, 10-14 | H04N1/40 |
| Y | * abstract; figures 5,7,24-39 *<br>* page 12, line 50 - page 17, line 44; figures 50-56 *<br>* page 19, line 17 - line 50 *<br>* page 25, line 5 - line 33 *<br>--- | 4,8,9 | |
| X<br>Y<br>A | US-A-4 893 188 (MURAKAMI ET AL.)<br>* abstract; figures 1,7 *<br>* column 11, line 2 - column 12, line 39 *<br>--- | 1<br>4,8,9<br>2,3,5-7, 10-14 | |
| A | ELECTRONICS DESIGN,<br>vol.34, no.11, May 1986, HASBROUCK HEIGHTS, NEW JERSEY, USA<br>pages 57 - 58<br>M. BEEDIE 'image ic detects edges in real time'<br>* the whole document *<br>----- | 1-14 | |
| | | | TECHNICAL FIELDS SEARCHED (Int.Cl.5)<br><br>H04N |

The present search report has been drawn up for all claims

| Place of search | Date of completion of the search | Examiner |
|---|---|---|
| THE HAGUE | 28 September 1994 | Kassow, H |